# EUROPÄISCHE PATENTSCHRIFT

(11) **EP 0 987 514 B1**
(45) Veröffentlichungstag und Bekanntmachung des Hinweises auf die Patenterteilung: **01.10.2003**
(21) Anmeldenummer: 99114502.0
(22) Anmeldetag: 23.07.1999
(51) Int. Cl.: G01B 21/04, B25J 19/00, G01B 5/00, G01B 5/008

(54) **Messeinrichtung für Baugruppen, insbesondere Karosseriebaugruppen**
Measuring device for mounting assembly, especially for coachbuilding
Dispositif de mesure pour ensemble de montage, en particulier pour montage de carrosserie

(30) Priorität: 19.09.1998 DE 19843052
(43) Veröffentlichungstag der Anmeldung: 22.03.2000
(73) Patentinhaber: Dr.Ing. h.c.F. Porsche Aktiengesellschaft, 70435 Stuttgart (DE)
(72) Erfinder: Kirschbaum, Jörg, 75417 Mühlacker (DE); Dreissig, Bernd, 75223 Öschelbronn (DE)

(56) Entgegenhaltungen:
- EP-A- 0 522 610
- WO-A-89/01391
- DE-A- 3 312 862
- DE-A- 4 315 161
- DE-A- 19 648 848
- US-A- 4 548 373

## Beschreibung

Die Erfindung bezieht sich auf eine Meßeinrichtung nach dem Oberbegriff des Anspruchs 1.

Aus der DE 41 40 294 A1 ist eine Meßeinrichtung zur Bestimmung einer Flächenkontur durch mechanisches Abtasten einzelner Punkte einer Fläche mit einem Meßarm, der wenigstens drei gegeneinander bewegliche Gelenkarme aufweist, bekannt. Desweiteren sind Drei-D-Koordinaten Meßeinrichtungen bekannt, die auf Meßschienen geführt und welche beispielsweise mit stationären Meßplatten fest verbunden sind, wodurch eine Verwendung der Meßeinrichtung unmittelbar an die Meßplatte gebunden ist. Ein die Meßeinrichtung umfassender Meßarm wird manuell bewegt und gehalten. Aus der DE-A-196 48 848 ist ein Höhenmeß- und Anreißgerät zum dreidimensionalen Messen und/oder anreißenden Werkstücken bekannt, bei der die Arme mit einer Kompensationsvorrichtung, bestehend aus einer Rolle mit Exzenter, verbunden sind und hierdurch die Arme des Geräts in jeder beliebigen Position blockiert werden können. Die Arme sind über Drehgelenke miteinander verbunden, wobei die Kompensationsvorrichtung zwischen den zueinander bewegbaren Armen angeordnet ist.

Aufgabe der Erfindung ist es, eine Meßeinrichtung zu schaffen, die in einfacher Weise flexibel zum Aufbauen und Kontrollieren von Baugruppen, insbesondere von Karosseriebaugruppen einsetzbar ist.

Diese Aufgabe wird erfindungsgemäß durch die Merkmale des Anspruchs 1 gelöst. Weitere vorteilhafte Merkmale beinhalten die abhängigen Ansprüche.

Die mit der Erfindung hauptsächlich erzielten Vorteile bestehen darin, daß die Meßeinrichtung unabhängig von einer stationären Meßplatte vielseitig einsetzbar ist, so daß eine Verwendung, beispielsweise im Fahrzeug, in Baugruppen, in der Produktion im Lager und auch allgemein in der Werkstatt möglich wird. Die Baugruppen können mittels der Meßeinrichtung entsprechend repariert geändert, erweitert und aufgebaut werden.

Damit beispielsweise der Aufbau einer Baugruppe in einfacher Weise mit der Meßeinrichtung vorgenommen werden kann, sind die Gelenkarme des Meßarmes in den Schwenk- und Drehlagern arretierbar, so daß ein Meßtaster des Meßarmes entsprechend von eingestellten Koordinaten einen feststehenden Meßpunkt im Raum fixiert.

Dieser Meßpunkt und weitere Meßpunkte dienen zum Aufbau bzw. zur Überprüfung der Baugruppe oder dergleichen. Gegenüber bekannten Meßeinrichtungen, bei denen der Meßarm manuell gehalten werden muß, ist der Meßarm nach der Erfindung über die Arretiereinrichtungen in jeder Stellung beliebig festsetzbar und kann den Erfordernissen entsprechend bewegt und wieder festgesetzt werden.

Die Arretiereinrichtungen sind in den Schwenk- und Drehlagern angeordnet und werden gleichzeitig aktiviert, so daß der Meßarm insgesamt ein starres Gebilde darstellt und eine Aufbauarbeit oder ein kontrollierender Meßvorgang in einfacher Weise durchführbar ist.

Die Arretiereinrichtung kann pneumatisch, hydraulisch, elektrisch oder in sonstiger Weise betätigt werden, wobei nach der Erfindung eine pneumatische Einrichtung beschrieben wird.

Die Arretiereinrichtungen umfassenden Klemmelemente sind in Form von Ringelementen oder dergleichen ausgebildet und in Kammern der Lager angeordnet. Mittels einer Druckluftbeaufschlagung bewirken diese Ringelemente am feststehenden Teil der Gelenkarme eine Klemmung und somit ein Festsetzen des Meßarmes.

Ein am Ständer des Meßarmes um eine vertikale Achse drehbarer Gelenkarm ist mittels einer Scheibenbremse festsetzbar.

Die Arretiereinrichtungen sowie die Scheibenbremse sind über luftdruckführende Leitung untereinander verbunden und mit einer über einen Schalter ein- und ausschaltbaren Pumpe versehen. Dies ermöglicht in schneller Weise ein Arretieren aller Gelenkarme gemeinsam sowie ein Lösen der Arretierung zum weiteren Fixieren von Meßpunkten.

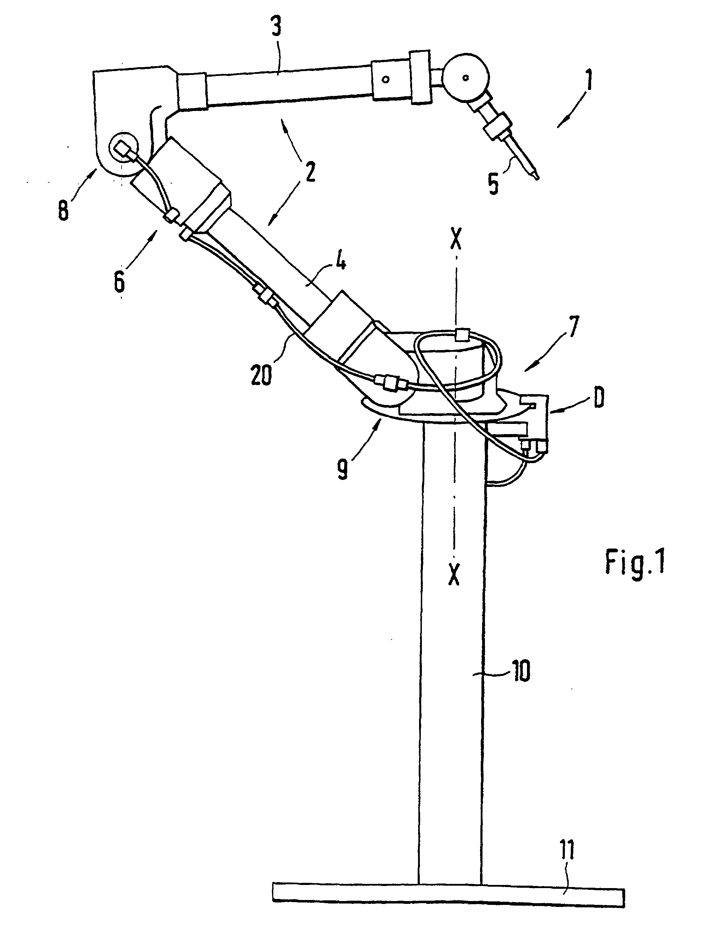

Ein Ausführungsbeispiel der Erfindung ist in den Zeichnungen dargestellt und wird im folgenden näher beschrieben. Es zeigen
- Fig. 1: eine Seitenansicht auf einen Meßarm, mit zwei Gelenkarmen und einen Ständer mit Fußplatte,

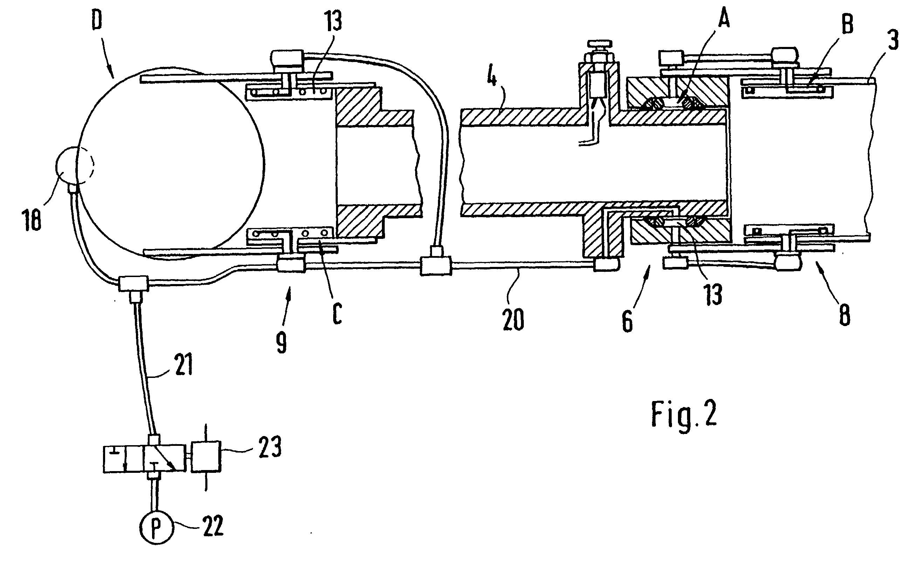

- Fig. 2: eine teilweise Draufsicht auf den Meßarm mit Dreh- und Schwenklagern sowie einer Scheibenbremse,

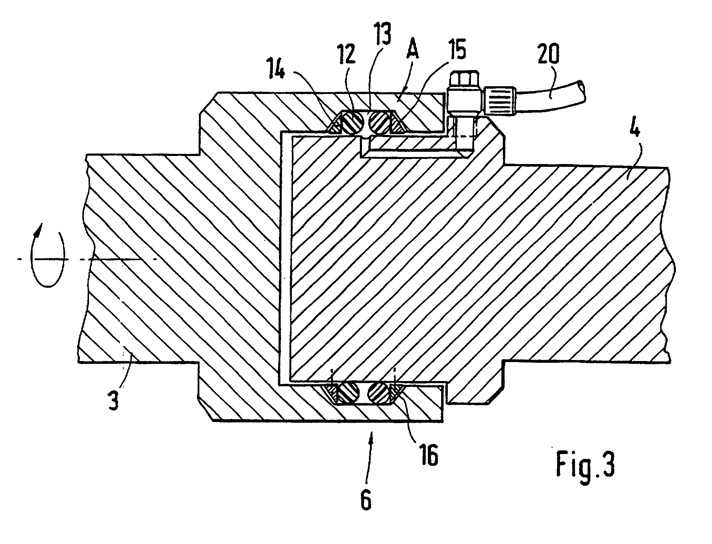

- Fig. 3: einen Schnitt durch eine Schwenklagerung um eine Querachse mit einer Arretiereinrichtung,
- Fig. 4: einen Schnitt durch eine Drehlagerung um eine Längsachse mit einer Arretiereinrichtung, und
- Fig. 5: eine Darstellung einer Scheibenbremse am Gelenkarm.

Die Meßeinrichtung 1 umfaßt im wesentlichen einen Meßarm 2 mit zwei Gelenkarmen 3 und 4 sowie einem Meßtaster 5. Die Gelenkarme 3, 4 sind über ein Drehlager 6, und Schwenklager 8, 9 miteinander gelenkig verbunden. Ein weiteres Drehlager 7 für den Gelenkarm 4 um eine Achse x - x ist am Ständer 10 vorgesehen, der eine Fußplatte 11 oder dergleichen aufweist.

Jedes Lager 6, 8 und 9 ist mit einer Arretiereinrichtung A, B und C versehen, und nur das Drehlager 7 kann mit einer Scheibenbremse D ausgerüstet sein.

Die Arretiereinrichtungen A, B und C sind mit einer Ringelemente 12 umfassenden Klemmeinrichtung versehen, welche jeweils zwischen einem feststehenden und einem beweglichen Teil der Gelenkarme 3, 4 in Kammern 13 der Lager 6, 8, 9 angeordnet sind.

Die Betätigung der Arretiereinrichtungen A, B, C erfolgt pneumatisch, indem in die Kammern 13 der Lager Druckluft eingepreßt wird und die Ringelemente 12 klemmend an einem feststehenden Teil der Gabelarme 3, 4 gepreßt werden.

Die Arretiereinrichtung A im Lager 6 weist in der Kammer 13 Keilelemente 14, 15 auf, die mit ihren Schrägflächen korrespondierend zu Schrägflächen 16 der Kammer 13 angeordnet sind. Durch Druckluftbeaufschlagung der Kammern 13 schieben sich die Keilelemente 14, 15 durch die Ringelemente 12 entlang der Schrägfläche 16 gegen das feststehende Teil des Lenkerarmes und bewirken somit eine Klemmwirkung.

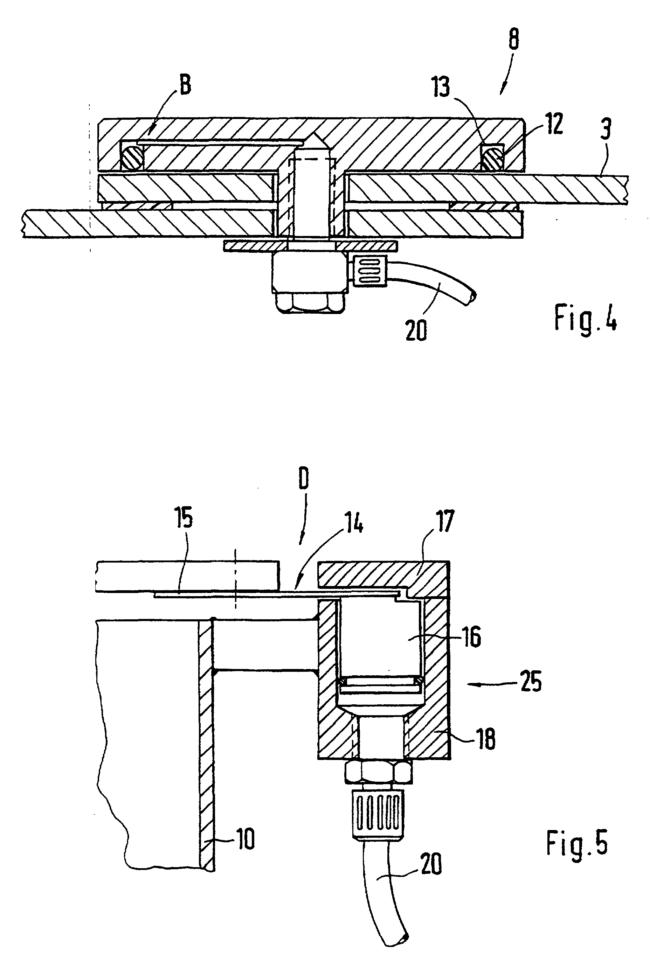

Wie Figur 5 näher zeigt, wird der gesamte Meßarm 2 am Ständer 10 über eine Scheibenbremse 14 festgesetzt. Die Scheibenbremse 14 besteht im wesentlichen aus einer Bremsscheibe 15 am Gelenkarm 4, die über einen Druckstempel 16 an einer Gegendruckplatte 17 eines Gehäuses 18 festgesetzt wird.

Die Arretiereinrichtungen A, B, C in den Lagern 6, 8 und 9 sowie die Scheibenbremse D im Lager 7 sind über Druckluftleitungen 20 alle miteinander verbunden, wobei die Einspeisung der Druckluft beispielsweise über die Leitung 21 erfolgt, die mit einer Pumpe 22 verbunden ist, welche über einen Schalter 23 ein- und ausschaltbar ist.

## Patentansprüche

1. Meßeinrichtung für Baugruppen, insbesondere Karosseriebaugruppen, die einen mehrteiligen Meßarm (2) mit einem Meßtaster (5) aufweist, und mit einer Drei-D-Koordinaten speichernden Auswerteeinheit zusammenarbeitet und wobei die Meßeinrichtung (1) aus einem unabhängig von einer stationären Meßplatte verwendbaren Baueinheit mit dem Meßarm (2) besteht, dessen einzelne Gelenkarme (3, 4) verstellbar in Schwenk- und Drehlagern (6, 8, 9) gehalten und über ansteuerbare Arretiereinrichtungen (A, B, C) in eingestellten Positionen festsetzbar sind, wobei die Arretiereinrichtungen (A, B, C) aus druckluftangesteuerten Klemmeinrichtungen in den Dreh- und Schwenklagern (6, 8, 9) der Gelenkarme (3, 4) bestehen, welche jeweils zwischen einem feststehenden und einem beweglichen Teil der Gelenkarme (3, 4) angeordnet sind, **dadurch gekennzeichnet, daß** die Klemmeinrichtungen mit Druckluft beaufschlagte Ringelemente (12) in Kammern (13) der Lager (6, 8, 9) umfassen, welche jeweils klemmend an einem feststehenden Teil der Gelenkarme (3, 4) anpreßbar sind, in dem in die Kammern der Lager (6, 8, 9) Druckluft eingepreßt wird.

2. Einrichtung nach Anspruch 1, **dadurch gekennzeichnet, daß** die Meßeinrichtung (1) mindestens einen Ständer (10) am Meßarm (2) zum temporären Festsetzen an einer Baugruppe aufweist.

3. Einrichtung nach den Ansprüchen 1 oder 2, **dadurch gekennzeichnet, daß** mindestens eine Arretiereinrichtung (A) von den Ringelementen (12) druckbeaufschlagte Keilelemente (14) umfaßt, die mit Schrägflächen (16) einer Kammer (13) im feststehenden Teil der Gelenkarme (3, 4) zusammenwirkt.

4. Einrichtung nach den Ansprüchen 1, 2 oder 3, **dadurch gekennzeichnet, daß** der den Meßtaster (5) aufweisende Gelenkarm (3) von dem mit einem Verbindungsfuß (11) versehene Gelenkarm (4) unabhängig dreh- und schwenkbar ausgeführt ist und jedes der Lager (6, 8, 9) mit der Arretiereinrichtung (A, B, C) versehen ist.

5. Einrichtung nach Anspruch 4, **dadurch gekennzeichnet, daß** der mit dem Verbindungsfuß (11) versehene Gelenkarm (4) eine Bremsscheibe (15) aufweist und zum Verbindungsfuß (11) in seiner Schwenkbewegung um eine vertikale Schwenkachse (x - x) mittels eines Spannelements (D) festsetzbar ist.

6. Einrichtung nach Anspruch 5, **dadurch gekennzeichnet, daß** das Spannelement (D) der Bremsscheibe (15) aus einem Druckkolben (16) in einem Gehäuse (18) besteht und zwischen diesem und einer Gegendruckplatte (17) des Gehäuses (18) die Bremsscheibe (15) angeordnet ist.

7. Einrichtung nach einem oder mehreren der vorhergehenden Ansprüche, **dadurch gekennzeichnet, daß** den Kammern (13) der Arretiereinrichtungen (A, B, C) über mehrere Verbindungsleitungen (20) Druckluft zuführbar ist, die über eine Pumpe (22) erzeugbar ist, welche über einen Schalter (23) zum Ein- und Abschalten aktivierbar ist.

## Claims

1. A measuring device for sub-assemblies, in particular bodywork sub-assemblies, which comprises a multiple-part measuring arm (2) with a measuring sensor (5) and which cooperates with an evaluation unit storing 3-D co-ordinates, and wherein the measuring device (1) comprises a structural unit - usable independently of a stationary measurement plate - with the measuring arm (2), the individual articulated arms (3, 4) of which are held in a displaceable manner in pivot and rotational bearings (6, 8, 9) and can be fixed in set positions by way of actuable locking devices **(A, B, C),** wherein the locking devices **(A, B, C)** comprise clamping devices actuable by compressed air in the pivot and rotational bearings (6, 8, 9) of the articulated arms (3, 4), which are arranged in each case between a stationary and a movable part of the articulated arms (3, 4), **characterized in that** the clamping devices comprise annular members (12) acted upon with compressed air in chambers (13) in the bearings (6, 8, 9), which can be pressed in each case against a stationary part of the articulated arms (3, 4) in a clamping manner, compressed air being forced into the chambers in the bearings (6, 8, 9).

2. A device according to Claim 1, **characterized in that** the measuring device (1) comprises at least one stand (10) on the measuring arm (2) for fixing temporarily to a subassembly.

3. A device according to Claim 1 or 2, **characterized in that** at least one locking device **(A)** comprises wedge members (14) which are acted upon with compressed air by the annular members (12), the said locking device **(A)** co-operating with oblique faces (16) of a chamber (13) in the stationary part of the articulated arms (3, 4).

4. A device according to Claim 1, 2 or 3, **characterized in that** the articulated arm (3) comprising the measuring sensor (5) is designed so as to be rotatable and pivotable independently of the articulated arm (4) provided with a connecting base (11), and each of the bearings (6, 8, 9) is provided with the locking device **(A, B, C).**

5. A device according to Claim 4, **characterized in that** the articulated arm (4) provided with the connecting base (11) has a brake disc (15) and it can be fixed by means of a clamping member **(D)** to the connecting base (11) in its pivoting movement about a vertical pivot axis **(x-x).**

6. A device according to Claim 5, **characterized in that** the clamping member **(D)** of the brake disc (15) comprises a pressure piston (16) in a housing (18), and the brake disc (15) is arranged between the latter and a counter-pressure plate (17) of the housing (18).

7. A device according to one or more of the preceding Claims, **characterized in that** compressed air, which can be produced by way of a pump (22) which can be activated to turn on and off by way of a switch (23), can be supplied to the chambers (13) in the locking devices **(A, B, C)** by way of a plurality of connecting lines (20).

## Revendications

1. Dispositif de mesure pour ensembles de montage, en particulier ensembles de montage de carrosserie, qui comporte un bras de mesure (2) en plusieurs parties avec un palpeur de mesure (5), et qui coopère avec une unité d'exploitation mémorisant des coordonnées en trois dimensions, le dispositif de mesure (1) étant constitué d'une unité de montage, pouvant être utilisée indépendamment d'une plaque de mesure fixe, avec le bras de mesure (2) dont différents bras articulés (3, 4) sont maintenus réglables dans des paliers pivotants et paliers tournants (6, 8, 9), et peuvent être fixés, par des dispositifs d'arrêt (A, B, C) commandables, dans des positions réglées, les dispositifs d'arrêt (A, B, C) étant constitués de dispositifs de serrage commandés au moyen d'air comprimé, dans les paliers tournants et pivotants (6, 8, 9) des bras articulés (3, 4), chacun d'eux étant disposé entre une partie fixe et une partie mobile des bras articulés (3, 4), **caractérisé en ce que** les dispositifs de serrage comprennent des éléments annulaires (12), soumis à de l'air comprimé, dans des chambres (13) des paliers (6, 8, 9), lesquels éléments annulaires peuvent être pressés chacun contre une partie fixe des bras articulés (3, 4), en la serrant, par le fait que de l'air comprimé est injecté dans les chambres des paliers (6, 8, 9).

2. Dispositif selon la revendication 1, **caractérisé en ce que** le dispositif de mesure (1) comporte au moins un montant (10) sur le bras de mesure (2) pour la fixation temporaire à un ensemble de montage.

3. Dispositif selon les revendications 1 ou 2, **caractérisé en ce qu'**au moins un dispositif d'arrêt (A) comprend des éléments en coin (14), soumis à pression par les éléments annulaires (12), qui coopèrent avec des surfaces obliques (16) d'une chambre (13) dans la partie fixe des bras articulés (3, 4).

4. Dispositif selon les revendications 1, 2 ou 3, **caractérisé en ce que** le bras articulé (3) comportant le palpeur de mesure (5) est réalisé de manière à pouvoir tourner et pivoter indépendamment du bras articulé (4) pourvu d'un pied de liaison (11), et chacun des paliers (6, 8, 9) est pourvu du dispositif d'arrêt (A, B, C).

5. Dispositif selon la revendication 4, **caractérisé en ce que** le bras articulé (4), pourvu du pied de liaison (11), comporte un disque de frein (15) et peut être fixé, au moyen d'un élément de serrage (D), par rapport au pied de liaison (11) dans son mouvement de pivotement autour d'un axe de pivotement vertical (x, x).

6. Dispositif selon la revendication 5, **caractérisé en ce que** l'élément de serrage (D) du disque de frein (15) est constitué d'un piston de pression (16) dans un boîtier (18), et le disque de frein (15) est disposé entre celui-ci et une contre-plaque de pression (17) du boîtier (18).

7. Dispositif selon une ou plusieurs des revendications précédentes, **caractérisé en ce qu'**on peut amener aux chambres (13) des dispositifs d'arrêt (A, B, C), par plusieurs conduites de liaison (20), de l'air comprimé qui peut être produit au moyen d'une pompe (22), laquelle peut être activée , au moyen d'un interrupteur (23), pour la mise en marche et la mise à l'arrêt.
